# EUROPEAN PATENT APPLICATION

(11) **EP 4 269 336 A1**
(43) Date of publication of application: **01.11.2023**
(21) Application number: 21913328.7
(22) Date of filing: 13.10.2021
(51) Int. Cl.: C01B 25/30, C01G 49/08, H01M 10/0525, H01M 10/54

(54) **METHOD FOR RECYCLING LITHIUM IRON PHOSPHATE WASTE AND USE THEREOF**

(30) Priority: 28.12.2020 CN 202011587281
(71) Applicant: Hunan Brunp Recycling Technology Co., Ltd., Changsha, Hunan 410600 (CN); Guangdong Brunp Recycling Technology Co., Ltd, Foshan, Guangdong 528137 (CN); Hunan Brunp EV Recycling Co., Ltd., Changsha, Hunan 410600 (CN)
(72) Inventor: LI, Jie, Changsha, Hunan 410600 (CN); DUAN, Jinliang, Changsha, Hunan 410600 (CN); QIAO, Yanchao, Changsha, Hunan 410600 (CN); CHEN, Ruokui, Changsha, Hunan 410600 (CN); LI, Changdong, Changsha, Hunan 410600 (CN)
(74) Representative: Meyer, Thorsten
(86) International application number: PCT/CN2021/123412
(87) International publication number: WO 2022/142583

(57) **Abstract**

The present disclosure discloses a method for recycling lithium iron phosphate waste and its application. The method comprises the following steps: disassembling, crushing, and sieving the lithium iron phosphate waste to obtain a lithium iron phosphate powder; Diluting a ionic membrane liquid alkali, adding the lithium iron phosphate powder to the alkali, stirring under an oxidizing atmosphere in water bath to perform a reaction; filtering a resulting product to obtain a leachate and a lithium phosphate slag; drying the lithium phosphate slag, adding an ammonia aqueous solution to the slag to perform a reaction, filtering to obtain an ammonia aqueous solution containing lithium phosphate and a filter residue; the ammonia aqueous solution containing lithium phosphate is evaporated to obtain lithium phosphate. By adopting the present method of removing aluminum by alkaline leaching under an oxidizing atmosphere, the aluminum content in the obtained lithium iron phosphate slag is 0.08%. Through many experiments, and testing of the liquid phase, it is found that there is basically no iron in the liquid phase, indicating that the iron loss rate is almost zero; the loss rate of lithium is 2.8-3.3%; the loss rate of phosphorus is 2.5-3.0%.

## Description

### TECHNICAL FIELD

The present disclosure relates to the technical field of spent battery material recycling, in particular to a method for recycling lithium iron phosphate waste and its application.

### BACKGROUND

With the rapid development of the new energy industry, the amount of used power batteries has also ushered in an explosive growth, of which lithium iron phosphate batteries account for a large proportion. At present, the recycling methods of waste lithium iron phosphate batteries are divided into: pyrometallurgy recycling, hydrometallurgy recycling, high temperature solid phase repair technology and biological leaching technology. Among them, the most widely used is the hydrometallurgy recycling process. Its main technical route is to use acid-base solutions to form precipitates in the process of dissolving lithium iron phosphate. Each metal ion exists in the form of oxides and salts. By removing impurities such as copper and aluminum, lithium salt and iron phosphate precipitation are obtained as the target products. Aluminum ions are existing as impurity elements in an acid leaching solution. During the process of recovering the metal elements in the form of iron phosphate and lithium carbonate, the introduction of aluminum impurities will generate aluminum phosphate, which reduces the purity of the iron phosphate produced, resulting in a reduced electrochemical performance of the lithium iron phosphate cathode material prepared from raw materials adopting the iron phosphate precursors.

At present, a method for extracting lithium and iron phosphate from lithium iron phosphate waste is disclosed. Lithium iron phosphate powder is soaked in 0.5-2mol/L NaOH solution for 30-180 min to obtain an aluminum-removed material. When the alkaline leaching process is adopted to remove aluminum in the method, the reaction system is not heated and stirred, which results in a low reaction rate and reaction degree, and the actual aluminum removal effect is average. The related technology discloses a method for selectively extracting lithium from lithium iron phosphate waste materials. In the method, NaOH is added in an amount of 1.2-1.5 times the molar amount of aluminum to perform a extraction at 90-95°C for 2-3 hours to obtain an aluminum-removed lithium iron phosphate material. The concentration of NaOH solution selected by this method is relatively low, and the aluminum removal effect is not ideal.

In addition, driven by economic benefits, the currently reported spent lithium iron phosphate batteries recycling is mainly based on the recovery of lithium elements, in which lithium carbonate, lithium phosphate or lithium dihydrogen phosphate are obtained by precipitation. Lithium phosphate has strong heat resistance, no radioactivity, long light efficiency with short lighting time and low cost. It is an ideal material for the production of color phosphors. Moreover, the nitrogen-containing lithium phosphate film is the most widely used electrolyte film for all solid-state thin-film lithium batteries. And the recycled materials can also be used to prepare lithium iron phosphate as the cathode material for lithium-ion batteries.

At present, a method for recovering the cathode material of waste lithium iron phosphate battery is also disclosed. The lithium iron phosphate waste is calcined and oxidized, and then leached by diluted sulfuric acid to obtain a leachate. A filtrate is obtained by filtrating the leachate to remove iron oxide and obtain. Ammonia is added to the filtrate to adjust the pH for a fractional precipitation of iron phosphate and impurities such as copper and aluminum etc. Then NaOH is added to the filtrate to adjust the pH and precipitate lithium phosphate, followed by washing and drying to obtain a lithium phosphate product. Although this method is capable of recovering the metal elements more comprehensively from the cathode material and improves the resource recovery rate, the entire process includes several calcination operations, leading to a relatively large amount of overall energy consumption, and the recovery rate of the key element lithium is relatively low.

### SUMMARY OF THE PRESENT DISCLOSURE

The purpose of the present disclosure is to provide a method for recycling lithium iron phosphate waste and its application, which comprises an aluminum removal process before a hydrometallurgy recycling process, and improves the quality of the iron phosphate product obtained. Then lithium phosphate and ferroferric oxide are prepared through the method. This method innovatively provides an oxidizing atmosphere in a process of alkaline leaching of aluminum, partially oxidizes the divalent iron to obtain ferroferric oxide. And by conversion of a slag to a liquid phase, impurities such as copper and aluminum are effectively removed to obtain a high-purity lithium phosphate.

To achieve the aforementioned objectives, the following technical solution is adopted in the present disclosure.

A method for recycling lithium iron phosphate waste, comprising the following steps:
(1) Subjecting the lithium iron phosphate waste to dissembling, crushing and screening to obtain a lithium iron phosphate powder;
(2) Diluting an ionic membrane liquid alkali, adding the diluted ionic membrane liquid alkali to the lithium iron phosphate powder and stirring to perform a reaction in a water bath under an oxidizing atmosphere, filtering to obtain a leachate and a lithium phosphate slag;
(3) Drying the lithium phosphate slag and adding the slag to an ammonia aqueous solution to perform a reaction, filtrating to obtain a filter slag and an ammonia aqueous solution containing lithium phosphate;
(4) Evaporating the ammonia aqueous solution containing lithium phosphate to obtain lithium phosphate.

In some embodiments, in step (2), the ionic membrane liquid alkali has a mass concentration of 30% and is diluted to a mass concentration of 3%-10%. In other embodiments, the ionic membrane liquid alkali is diluted to a mass concentration of 5%-7%.

In some embodiments, in step (2), the lithium iron phosphate power and the ionic membrane liquid alkali are in a mass-volume ratio of 1:(4-10).

In some embodiments, in step (2), the ionic membrane liquid alkali has a NaOH mass concentration of 30%, and the total concentration of the other purities in the liquid alkali such as ClO⁻, CO₃²⁻, SO₄²⁻, SiO₂ etc. is less than 0.05%.

In some embodiments, in step (2), the oxidizing atmosphere is an air or oxygen atmosphere.

In some embodiments, in step (2), the reaction in water bath is carried out at 60°C-90°C for 0.5-2 h.

In some embodiments, in step (3), the stirring is carried out at a rotational speed of 300-500 r/min. In some other embodiments, the stirring is carried out at a rotational speed of 400 r/min

In some embodiments, in step (3), the ammonia aqueous solution has a mass concentration of 8-10%.

In some embodiments, in step (3), the lithium phosphate slag and the ammonia solution are in a mass-volume ratio of 1: (6-10).

In some embodiments, in step (3), the reaction is carried out in an atmosphere of nitrogen or argon.

In some embodiments, in step (3), the reaction is carried out at 30°C-38°C for 40-80 min.

In some embodiments, the step (3) further comprises a step of performing magnetic separation to the filter slag to obtain Fe₃O₄.

In some embodiments, mixing the lithium iron phosphate powder obtained in step (1) with the ionic membrane alkali liquid to obtain a lithium iron phosphate slurry, stirring the slurry in a water bath to perform a reaction, filtering a resulting product to obtain a leachate and a lithium iron phosphate slag; drying the lithium iron phosphate slag and performing a hydrometallurgy process to the slag to obtain iron phosphate.

In some other embodiments, the reaction in a water bath is carried out at a temperature of 60°C-90°C. In some other embodiments, the reaction in a water bath is carried out at a temperature of 80°C.

In some other embodiments, the reaction in a water bath is carried out for 0.5-2 h. In some other embodiments the reaction in a water bath is carried out for 1.5 h.

In some other embodiments, the drying is carried out at a temperature of 70°C-90°C, further preferable 80°C.

By adopting above mentioned method to remove aluminum from a lithium iron phosphate waste, the leaching rate of aluminum is above 70%, while leaching rates of iron, lithium and phosphorus in the leachate are below 3%.

The present disclosure also provides the application of the above-mentioned method in battery recycling.

Advantages of the present disclosure:
(1) After aluminum is removed by alkali leaching under an oxidizing atmosphere of the present disclosure, the aluminum content in the obtained lithium iron phosphate slag is 0.08%. Through many experiments, and by testing the liquid phase, it is found that there is basically no iron in the liquid phase, indicating that the loss rate of iron is almost zero; the loss rate of lithium is 2.8-3.3% while the loss rate of phosphate is 2.5-3.0%.
(2) Steps (1) and (2) of the present disclosure are equivalent to a pretreatment process of a hydrometallurgy recovery process. Multi-stage aluminum removal achieved a final aluminum removal rate of more than 95%. The process is simple, and the alkaline leaching solution can be reused many times in a suitable range. The product is valuable and has considerable economic benefits.
(3) Using of the method of the present disclosure to recover lithium iron phosphate waste can realize a comprehensive recovery of lithium, iron, and phosphorus, wherein the recovery rate of lithium is more than 95%, the process is simple, the product is valuable, and has considerable economic benefits.

### BRIEF DESCRIPTION OF DRAWINGS

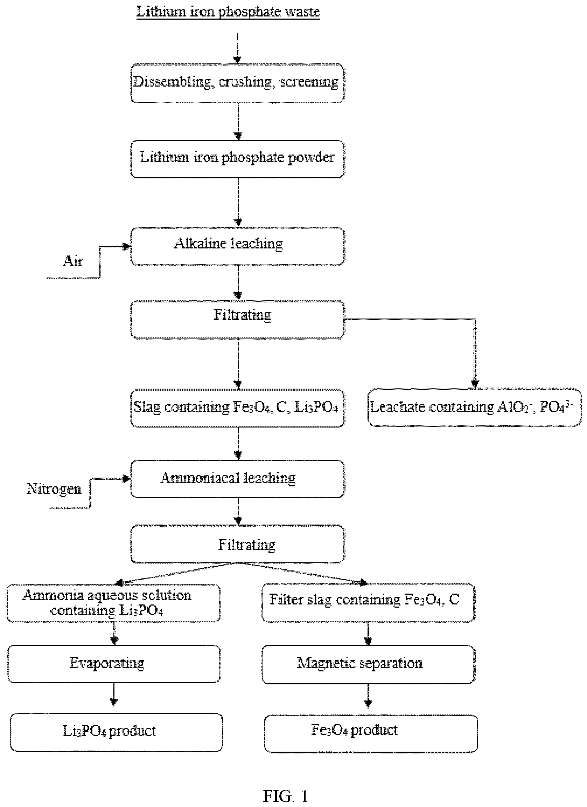

FIG. 1 is a process flow diagram of Example 1 of the present disclosure.

### DETAILED DESCRIPTION OF THE ILLUSTRATED EXAMPLES

In order to fully understand the present disclosure, the preferred experimental scheme of the present disclosure will be described below in conjunction with examples to further illustrate the characteristics and advantages of the present disclosure. Any change or alteration that does not deviate from the gist of the present disclosure can be understood by those skilled in the art. The scope of protection of the present disclosure is determined by the scope of the claims.

Where specific conditions are not indicated in the examples of the present disclosure, it shall be carried out under the conventional conditions or the conditions recommended by the manufacturer. The raw materials, reagents, etc. used without indicating their manufacturers are all conventional products commercially available.

### Example 1

The recycling method of a lithium iron phosphate waste of this embodiment comprises the following steps:
(1) Disassembling, crush and screening the lithium iron phosphate waste to obtain a lithium iron phosphate powder;
(2) Weighing 500g of the lithium iron phosphate powder with a mass fraction of 67.7%, preparing 3000ml of a NaOH solution with a mass fraction of 10%, and mixing the powder with the NaOH solution to obtain a lithium iron phosphate slurry;
(3) Placing the slurry obtained in step (2) in a constant temperature water bath at a temperature of 80°C and introducing air to perform a reaction for 120 min, and filtering to obtain 2887ml of an alkaline solution containing sodium metaaluminate and sodium phosphate, and 409.2 of a slag containing lithium phosphate, carbon powder and ferroferric oxide;
(4) Weighing 300 g of the slag of step (3) containing lithium phosphate, carbon powder and ferroferric oxide, preparing 2400 ml of an ammonia aqueous solution of a mass fraction of 10%, and mixing the slag with the ammonia aqueous solution in a nitrogen atmosphere to obtain a lithium phosphate slurry;
(5) Placing the slurry obtained in step (4) at room temperature for 60 min to perform a reaction, and filtering to obtain 2355 ml of an ammonia aqueous solution containing lithium phosphate, and 237.8 g of a slag containing ferroferric oxide and carbon powder;
(6) Evaporating the ammonia aqueous solution containing lithium phosphate of step (5) to obtain 58.8 g of pure lithium phosphate product.

FIG. 1 is a process flow diagram of Example 1 of the present disclosure. From FIG. 1, it can be seen that the pretreated lithium iron phosphate waste is crushed and screened to obtain a lithium iron phosphate powder; it is mixed with a prepared sodium hydroxide solution to obtain a slurry. The slurry is subjected to a period of reaction under a certain temperature, stirring rate and oxidizing atmosphere, and then filtered to obtain a lithium phosphate slag and a leachate containing AlO₂⁻, PO₄³⁻, Na⁺, etc. Mix the lithium phosphate slag with a prepared ammonia aqueous solution of suitable concentration, adjust the solid-liquid ratio and perform a reaction in a protective atmosphere to obtain an aqueous ammonia solution containing lithium phosphate and a slag material containing Fe₃O₄, Cu, C and other components. The ammonia aqueous solution containing lithium phosphate is evaporated to obtain a pure lithium phosphate product; and the slag material is subjected to a magnetic separation process to obtain pure Fe₃O₄.

### Example 2

The recycling method of a lithium iron phosphate waste of this embodiment comprises the following steps:
(1) Disassembling, crush and screening the lithium iron phosphate waste to obtain a lithium iron phosphate powder;
(2) Weighing 500g of the lithium iron phosphate powder with a mass fraction of 67.7%, preparing 3000ml of a NaOH solution with a mass fraction of 12%, and mixing the powder with the NaOH solution to obtain a lithium iron phosphate slurry;
(3) Placing the slurry obtained in step (2) in a constant temperature water bath at a temperature of 80°C and introducing air to perform a reaction for 120 min, and filtering to obtain 2905 ml of an alkaline solution containing sodium metaaluminate and sodium phosphate, and 408.8 of a slag containing lithium phosphate, carbon powder and ferroferric oxide;
(4) Weighing 300 g of the slag of step (3) containing lithium phosphate, carbon powder and ferroferric oxide, preparing 2400 ml of an ammonia aqueous solution of a mass fraction of 8%, and mixing the slag with the ammonia aqueous solution in a nitrogen atmosphere to obtain a lithium phosphate slurry;
(5) Placing the slurry obtained in step (4) at room temperature for 60 min to perform a reaction, and filtering to obtain 2362 ml of an ammonia aqueous solution containing lithium phosphate, and 238.2 g of a slag containing ferroferric oxide and carbon powder;
(6) Evaporating the ammonia aqueous solution containing lithium phosphate of step (5) to obtain 57.9 g of pure lithium phosphate product.

### Example 3

The recycling method of a lithium iron phosphate waste of this embodiment comprises the following steps:
(1) Disassembling, crush and screening the lithium iron phosphate waste to obtain a lithium iron phosphate powder;
(2) Weighing 500g of the lithium iron phosphate powder with a mass fraction of 67.7%, preparing 2500ml of a NaOH solution with a mass fraction of 5%, and mixing the powder with the NaOH solution to obtain a lithium iron phosphate slurry;
(3) Placing the slurry obtained in step (2) in a constant temperature water bath at a temperature of 80°C and introducing air to perform a reaction for 90 min, and filtering to obtain 2412 ml of an alkaline solution containing sodium metaaluminate, and 473.1 of a slag containing lithium phosphate, carbon powder;
(4) Diluting the alkaline solution of step (3) and melting the slag to test the leaching rates. Leaching rates of aluminum, phosphorus and lithium are 70.8%, 2.47%, 2.82% respectively.

### Example 4

The recycling method of a lithium iron phosphate waste of this embodiment comprises the following steps:
(1) Disassembling, crush and screening the lithium iron phosphate waste to obtain a lithium iron phosphate powder;
(2) Weighing 500g of the lithium iron phosphate powder with a mass fraction of 67.7%, preparing 2500ml of a NaOH solution with a mass fraction of 6%, and mixing the powder with the NaOH solution to obtain a lithium iron phosphate slurry;
(3) Placing the slurry obtained in step (2) in a constant temperature water bath at a temperature of 80°C and introducing air to perform a reaction for 90 min, and filtering to obtain 2406 ml of an alkaline solution containing sodium metaaluminate, and 466.9 of a slag containing lithium phosphate, carbon powder;
(4) Diluting the alkaline solution of step (3) and melting the slag to test the leaching rates. Leaching rates of aluminum, phosphorus and lithium are 70.5%, 2.93%, 3.21% respectively.

### Example 5

The recycling method of a lithium iron phosphate waste of this embodiment comprises the following steps:
(1) Disassembling, crush and screening the lithium iron phosphate waste to obtain a lithium iron phosphate powder;
(2) Weighing 500g of the lithium iron phosphate powder with a mass fraction of 67.7%, preparing 2500ml of a NaOH solution with a mass fraction of 5%, and mixing the powder with the NaOH solution to obtain a lithium iron phosphate slurry;
(3) Placing the slurry obtained in step (2) in a constant temperature water bath at a temperature of 80°C and introducing air to perform a reaction for 120 min, and filtering to obtain 2395 ml of an alkaline solution containing sodium metaaluminate, and 468.3 of a slag containing lithium phosphate, carbon powder;
(4) Diluting the alkaline solution of step (3) and melting the slag to test the leaching rates. Leaching rates of aluminum, phosphorus and lithium are 71.5%, 2.74%, 3.08% respectively.

**Table 1 Materials and cost of Example 1**

| Materials | 30% ionic membrane alkaline | 20% ammonia aqueous solution | Nitrogen | Total |
|---|---|---|---|---|
| Additive amount/m³ | 1.55 | 2.4 | 0.5 | |
| Price/RMB | 1152 | 1223 | 12 | 2387 |

**Table 2 Contents of the lithium phosphate obtained in Example 1**

| Item | major component content | Ni/ppm | Co/ppm | Mn/ppm | Ca/ppm | Mg/ppm |
|---|---|---|---|---|---|---|
| Value | 99.13 | 2.54 | 2.72 | 41.99 | 19.74 | 24.97 |
| Al/ppm | Zn/ppm | Ti/ppm | Zr/ppm | Na/ppm | K/ppm | |
| 24.43 | 4.1 | 548 | 35.1 | 126.6 | 9.47 | |

**Table 3 Contents of the Fe₃O₄ obtained in Example 1**

| Item | major component content | Ni/ppm | Co/ppm | Mn/ppm | Ca/ppm | Mg/ppm |
|---|---|---|---|---|---|---|
| Value | 99.01 | 0.72 | 3.08 | 7.89 | 8.55 | 16.27 |
| Al/ppm | Zn/ppm | Zr/ppm | Na/ppm | K/ppm | | |
| 40.61 | 11.08 | 93.84 | 54.72 | 32.31 | | |

As shown in the table 1-3, the method of present disclosure has a lithium recovery rate more than 95%, and produces lithium phosphate and Fe₃O₄ with high purity. The lithium phosphate product can be applied in preparation of lithium iron phosphate cathode material and other materials with industrial utilization. And Fe₃O₄ can be applied in manufacture of pigments, polishing agents, and audio tapes and telecommunications equipment.

The method for recycling a lithium iron phosphate waste and application thereof provided by the present disclosure are described in detail above. Specific examples are used in this article to illustrate the principle and implementation of the present disclosure. The description of the above examples is only used to help understand the method and core idea of the present disclosure, including the best mode, and also enables any person skilled in the art to practice the present disclosure, including manufacturing and using any device or system, and implementing any combined method. It should be pointed out that for those of ordinary skill in the art, without departing from the principle of the present disclosure, several improvements and modifications can be made to the present disclosure, and these improvements and modifications also fall within the protection scope of the claims of the present disclosure. The scope of patent protection of the present disclosure is defined by the claims, and may include other embodiments that those skilled in the art can think of. If these other embodiments have structural elements that are not different from the literal expression of the claims, or if they include equivalent structural elements that are not substantially different from the literal expression of the claims, these other embodiments should also be included in the scope of the claims.

## Claims

1. A method for recycling lithium iron phosphate waste, comprising the following steps:
(1) subjecting the lithium iron phosphate waste to dissembling, crushing and screening to obtain a lithium iron phosphate powder;
(2) diluting and adding an ionic membrane liquid alkali to the lithium iron phosphate powder and stirring to perform a reaction in a water bath under an oxidizing atmosphere, filtering to obtain a leachate and a lithium phosphate slag;
(3) drying the lithium phosphate slag before adding it to an ammonia aqueous solution and stirring to perform a reaction, filtering to obtain a filter slag and an ammonia solution containing lithium phosphate;
(4) evaporating the ammonia solution containing lithium phosphate to obtain lithium phosphate.

2. The method according to claim 1, wherein in step (2), the ionic membrane liquid alkali has a mass concentration of 30% and is diluted to a mass concentration of 3%-10%.

3. The method according to claim 1, wherein in step (2), the lithium iron phosphate powder and the ionic membrane liquid alkali have a mass-to-volume ratio of 1:(4-10).

4. The method according to claim 1, wherein in step (2), the reaction in the water bath is carried out at 60°C-90°C; wherein in step (2), the reaction in the water bath is carried out for 0.5-2 h.

5. The method according to claim 1, wherein in step (2), the oxidizing atmosphere is an air atmosphere or an oxygen atmosphere.

6. The method according to claim 1, wherein in step (2), the stirring is carried out at a rotational speed of 300-500 r/min.

7. The method according to claim 1, wherein in step (3), the reaction is carried out in a nitrogen atmosphere or argon atmosphere; wherein in step (3), the reaction is carried out at 30°C-38°C for 40-80 min.

8. The method according to claim 1, wherein in step (3), the ammonia aqueous solution has a mass concentration of 8-10%.

9. The method according to claim 1, wherein step (3) further comprises subjecting the filter slag to a magnetic separation to obtain Fe₃O₄.

10. Application of the method of any one of claims 1-9 in battery recycling.
